# EUROPEAN PATENT APPLICATION

(11) **EP 3 940 728 A2**
(43) Date of publication of application: **19.01.2022**
(21) Application number: 21177116.7
(22) Date of filing: 25.11.2014
(51) Int. Cl.: H01F 27/28, H01F 41/04, H01F 38/14, H02J 50/00, H02J 50/70, H02J 50/12

(54) **WIRELESS CHARGING COIL**

(30) Priority: 25.11.2013 US 201361908573 P; 29.05.2014 US 201462004587 P; 27.08.2014 US 201414470381; 10.11.2014 US 201462077721 P
(62) Divisional of application: 14863209.4
(71) Applicant: A.K. Stamping Company, Inc., Mountainside, NJ 07092 (US)
(72) Inventor: Kurz, Arthur, Mountainside, NJ, 07092 (US); Duetsch, Bernard, Bound Brook, NJ, 08805 (US); Kurz, Joshua, Jersey City, NJ, 07302 (US)
(74) Representative: Hoffmann Eitle

(57) **Abstract**

A wireless charging coil is provided herein. More specifically, provided herein is a wireless charging coil (570) comprising a first stamped coil (530) having a first spiral trace, the first spiral trace defining a first space between windings, and a second stamped coil (550) having a second spiral trace, the second spiral trace defining a second space between windings, the first stamped coil and second stamped coil in co-planar relation, the first stamped coil positioned within the second space of the second stamped coil, and the second stamped coil positioned within the first space of the first stamped coil, the first and second coils electronically connected and an adhesive covering and surrounding the first stamped coil and the second stamped coil to bond the coils together and to insulate the coils.

## Description

### BACKGROUND

### FIELD OF THE DISCLOSURE

The present disclosure relates to a wireless charging coil and methods for manufacturing thereof. More specifically, the present disclosure relates to a bifilar parallel wound, series connected wireless charging coil.

### RELATED ART

Wireless power transfer is the transfer of electrical power from a base station (transferring power) to a mobile device (consuming power) through electromagnetic induction (inductive power) and/or resonant frequency method. Wireless power transfer is becoming increasingly popular in mobile devices, and particularly in smartphones. A popular standard for inductive charging technology is the Qi interface standard developed by the Wireless Power Consortium, which has several protocols to allow the wireless transfer of electrical power between electronic devices. Other standards may make use of electromagnetic induction or resonant frequency to wirelessly charge devices. A mobile device (or any other electronic device) must meet certain requirements and performance standards in order to be Qi compliant.

Consumers generally want their mobile devices to be small and thin but also powerful and efficient, which are often counteracting goals. More specifically, charging coils must vary the material thickness to lower resistance and increase efficiency. Further, maximizing these goals can lead to performance and manufacturing limitations.

What would be desirable, but has not yet been developed, is a thinner and more efficient wireless charging coil for wireless power transfer between electronic devices.

### SUMMARY

The present disclosure relates to wireless charging coils and methods for making thereof. More specifically, the present disclosure relates to a planar bifilar parallel-wound, series connected wireless charging coil. The coil has a thinner thickness (e.g., low profile), an increased density (e.g., high fill factor), and higher efficiency (e.g., lower resistance) than conventional wireless charging coils.

### BRIEF DESCRIPTION OF THE DRAWINGS

The foregoing features of the disclosure will be apparent from the following Detailed Description, taken in connection with the accompanying drawings, in which:
**FIG. 1** is a diagram showing processing steps for manufacturing a wireless charging coil;
**FIG. 2** is a schematic view of a first stamped coil with tie bars;
**FIG. 3** is a schematic view of a second stamped coil with tie bars;
**FIG. 4** is a schematic view of an assembled coil after the tie bars of the first and second stamped coils have been removed;
**FIG. 5** is a schematic view of the assembled wireless charging coil with jumpers attached;
**FIG. 6** is a close up view of portion A of **FIG. 5****;**
**FIG. 7** is a schematic view of an electrical component assembly including a wireless charging coil and NFC antenna;
**FIG. 8** is a schematic view of an assembled wireless charging coil with planar bifilar coils;
**FIG. 9** is a cross-sectional view of a portion of the wireless charging coil of **FIG. 8****;**
**FIG. 10** is a schematic view of an assembled wireless charging coil with stacked bifilar coils;
**FIG. 11** is a cross-sectional view of a portion of the wireless charging coil of **FIG. 10****;**
**FIG. 12** is a perspective view of an electrical component assembly;
**FIG. 13** is an exploded view of the electrical component assembly of **FIG. 12**
**FIG. 14** is a perspective view of a resonant coil;
**FIG. 15** is a perspective view of a resonant coil assembly;
**FIG. 16** is a perspective view of a folded stamped resonant coil;
**FIG. 17** is a perspective view of the coil of **FIG. 16** partially opened;
**FIG. 18** is a perspective view of the coil of **FIG. 16** fully opened;
**FIG. 19** is an exploded view of a low profile electrical component assembly; and
**FIG. 20** is a perspective view of the filler material of **FIG. 19****;**
**FIG. 21** is a diagram showing processing steps for manufacturing a wireless charging coil with adhesive;
**FIG. 22** is a partial cross-sectional view of a first stamped coil when applied to a first laminate;
**FIG. 23** is a partial cross-sectional view of an assembled coil positioned between a first and second laminate;
**FIG. 24** is partial cross-sectional view of an assembled coil;
**FIG. 25** is a partial top view of the assembled coil of **FIG. 24****;** and
**FIG. 26** is a top view of an assembled coil of the present disclosure.

### DETAILED DESCRIPTION

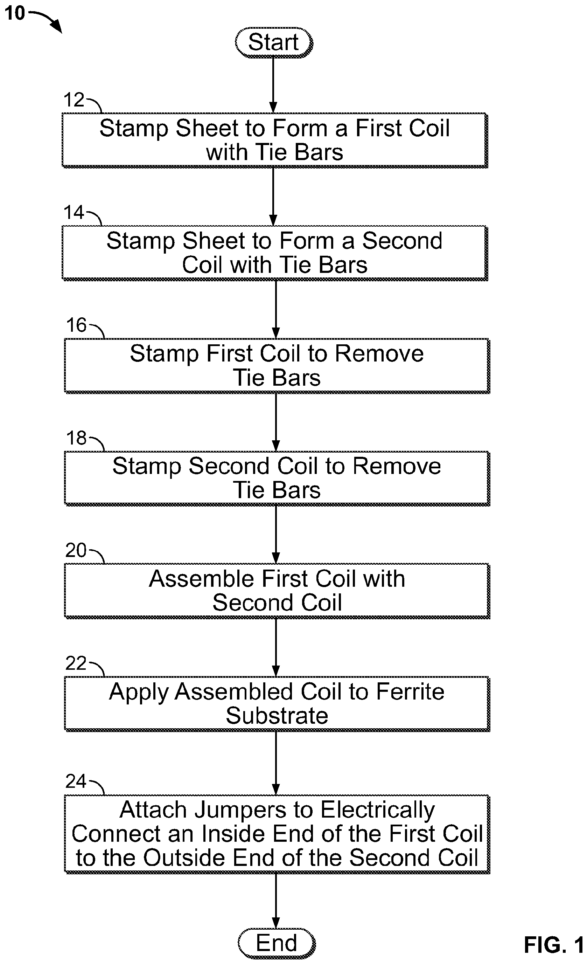

The present disclosure relates to a wireless charging coil and methods of making same. As discussed in more detail below in connection with **FIGS. 1** - **7**, the stamped metal wireless charging coil comprises a series of parallel traces connected in a bifilar fashion. In other words, the wireless charging coil includes first and second coils that are parallel, closely spaced, and connected in series such that the first and second coils have parallel currents. The first and second coils could be stacked or planar and connected in series and/or parallel to meet performance requirements (e.g., electrical requirements, power requirements, etc.). The wireless charging coil could be used in any battery powered device, particularly in mobile devices (e.g., smartphones, tablets, watches, etc.). The wireless charging coil can be made to be Qi compliant, but could be adjusted to comply with any wireless transfer protocol. A wireless charging coil with a greater amount of conductive material, such as copper, can be positioned within a given space by varying (e.g., increasing) the thickness of the coil, which increases energy availability. Compared with other wireless charging coils, the wireless charging coils described herein exhibit an increased magnetic coupling effectiveness (e.g., magnetic field strength) and thereby transmit energy at a higher efficiency.

**FIG. 1** is a diagram showing processing steps **10** for manufacturing a wireless charging coil of the present disclosure. In step **12,** a metal sheet is stamped to form a first coil with tie bars. The metal sheet could be any of a variety of materials suitable for wireless power transfer (e.g., copper, copper alloy, aluminum, aluminum alloy, etc.). In step **14,** a metal sheet (e.g., the same metal sheet or a different metal sheet) is stamped to form a second coil with tie bars. In step **16,** the first coil is stamped to remove the tie bars. In step **18,** the second coil is stamped to remove the tie bars. In step **20,** the first and second coils are assembled together. In step **22,** the assembled coil is applied to a ferrite substrate. In step **24,** jumpers (e.g., leads) are attached to electrically connect the first and second coils in series (e.g., an inside end of the first coil is electrically connected to the outside end of the second coil via a jumper).

The steps described above could be interchanged, consolidated, or omitted completely. For example, the coils could be stamped without first forming tie bars, and/or the first and second coils could be applied directly to the ferrite (without being assembled first), etc. Additionally, the coil could be photo-chemically etched or machined instead of stamped, or made by any other suitable manufacturing process.

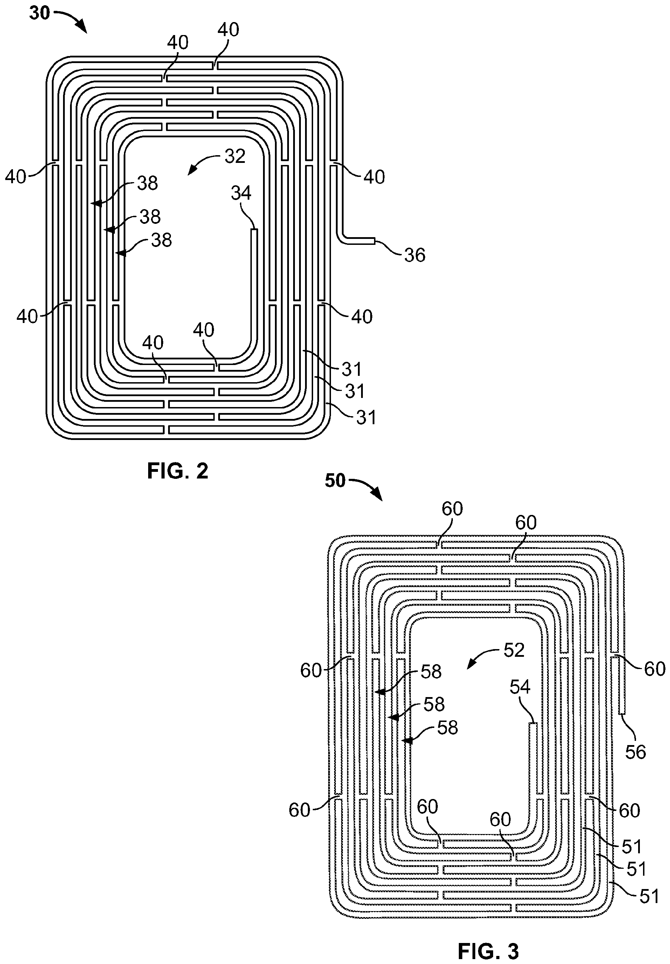

**FIG. 2** **is** a view of a first stamped coil **30** with tie bars. The first coil **30** can be a generally rectangular planar spiral trace **31,** although the trace **31** could form any suitable shape (e.g., circular planar spiral). The dimensions of the coil **30** could vary depending on the application of the coil **30** (e.g., as used in mobile devices, wearable devices, cars, etc.). The coil **30** could be of any suitable thickness, such as between 0.003 in. and 0.020 in., etc., but could be thicker for higher powered applications. The coil **30** could be of any suitable overall dimensions, such as between 0.25 in. and 4 in. in width and/or between 0.25 in. and 4 in. in height. The trace **31** could also be of any suitable dimensions. For example, the trace **31** could be between 0.005 in. and 0.250 in. in width. The dimensions could vary depending on physical and performance requirements of the mobile device (e.g., required frequency). The coil **30** could be made of any suitable material for wireless power transfer, such as, for example, copper, copper alloy, aluminum, aluminum alloy, tempered copper alloy (e.g., C110), etc.

The trace **31** of the coil **30** revolves around a center any number of times (e.g., 5, 10, etc.), such as to comply with any inductive or resonant power requirements. The trace **31** spirals to form an inside portion **32** at the center of the coil **30.** As a result, the coil **30** has an inside end **34** and an outside end **36.** The spaces **38** between the trace **31** are configured to be wide enough (e.g., 0.0285 in.) to accommodate the second stamped coil (described in more detail below). Tie bars **40** can be positioned at a plurality of locations throughout these spaces **38** to maintain the general shape of the coil **30** (e.g., prevent unwinding or deformation of the shape), such as during transportation of the coil **30** between locations or between stations. The outside end **36** could extend out at an angle, such as a generally ninety degree angle. The inside end **34** and outside end **36** can be disposed towards the same side of the coil **50,** but could be at any of a variety of locations in the coil **50.**

**FIG. 3** is a view of a second stamped coil **50** with tie bars. The second coil **50** shares most of the same features and characteristics of the first coil shown in **FIG. 2****.** The second coil **50** can be a generally rectangular planar spiral trace **51,** although the trace **51** could form any suitable shape (e.g., circular planar spiral). The dimensions of the coil **50** could vary depending on the application of the coil **50** (e.g., as used in mobile devices, wearable devices, cars, etc.). The coil **50** could be of any suitable thickness, such as between 0.003 in. and 0.020 in., etc., but could be thicker for higher powered applications. The coil **50** could be of any suitable overall dimensions, such as between 0.25 in. and 4 in. in width and/or between 0.25 in. and 4 in. in height. The trace **51** could also be of any suitable dimensions. For example the trace **51** could be between 0.005 in. and 0.250 in. in width. The dimensions could vary depending on physical and performance dimensions of the mobile device (e.g., required frequency). The coil **50** could be made of any suitable material for wireless power transfer, such as, for example, copper, copper alloy, aluminum, aluminum alloy, tempered copper alloy (e.g., C110), etc.

The trace **51** of the coil **50** revolves around a center any number of times (e.g., 5, 10, etc.), such as to comply with any inductive or resonant power requirements. The trace **51** spirals to form an inside portion **52** at the center of the coil **50.** As a result, the coil **50** has an inside end **54** and an outside end **56.** The spaces **58** between the trace **51** are configured to be wide enough (e.g., 0.0285 in.) to accommodate the first stamped coil **30** (described above). Tie bars **60** can be positioned at a plurality of locations throughout these spaces **58** to maintain the general shape of the coil **50** (e.g., prevent unwinding or deformation of the shape), such as during transportation of the coil **50** between locations or between stations. The outside end **56** does not extend out as with the first coil **30** (but could). The inside end **54** and outside end **56** can be disposed towards the same side of the coil **50,** but could be at any of a variety of locations in the coil **50.**

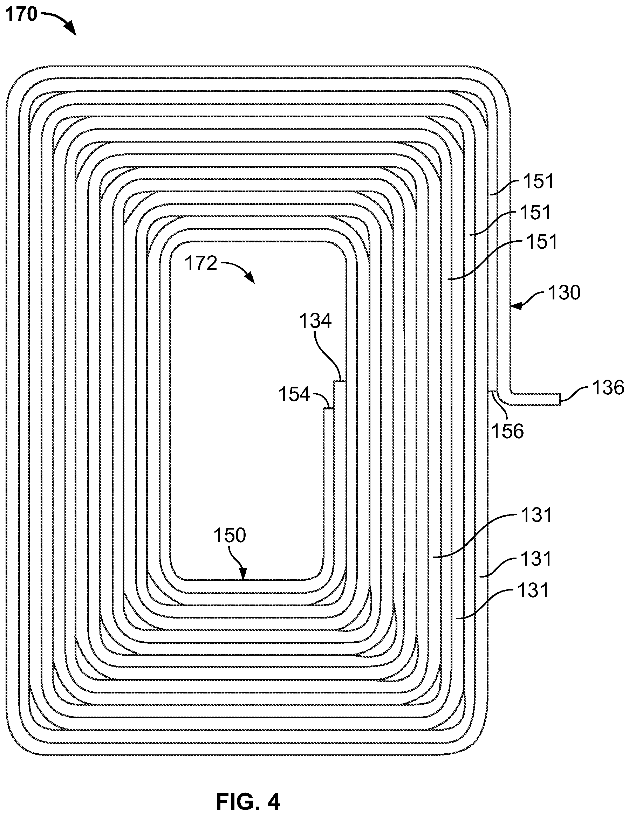

**FIG.** 4 is a view of an assembled coil **170** after the tie bars of the first and second stamped coils **130, 150** have been removed. As shown, the first and second coils **130, 150** fit into each other. More specifically, the first coil **130** fits into the space formed between the trace **151** of the second coil **150,** and conversely, the second coil **150** fits into the space formed between the trace **131** of the first coil **130.** However, when assembled, there are small gaps between the trace **131** of the first coil **130** and the trace **151** of the second coil **150** (e.g., 0.003 in., 0.004 in., etc.), as discussed below in more detail. As a result, together the first and second coils **130, 150** together form a parallel planar spiral. Also shown, the inside end **134** of the first coil **130** is adjacent to the inside end **154** of the second coil **150,** and the outside end **136** of the first coil **130** is adjacent to the outside end **156** of the second coil **150.** However, the ends could be any relative distance from one another. This stamping method could have an average space width variation of at least approximately 0.003 in. for the assembled coil **170.** The maximum and minimum variance are dependent on the assembled coil **170** dimensions (e.g., overall height and width).

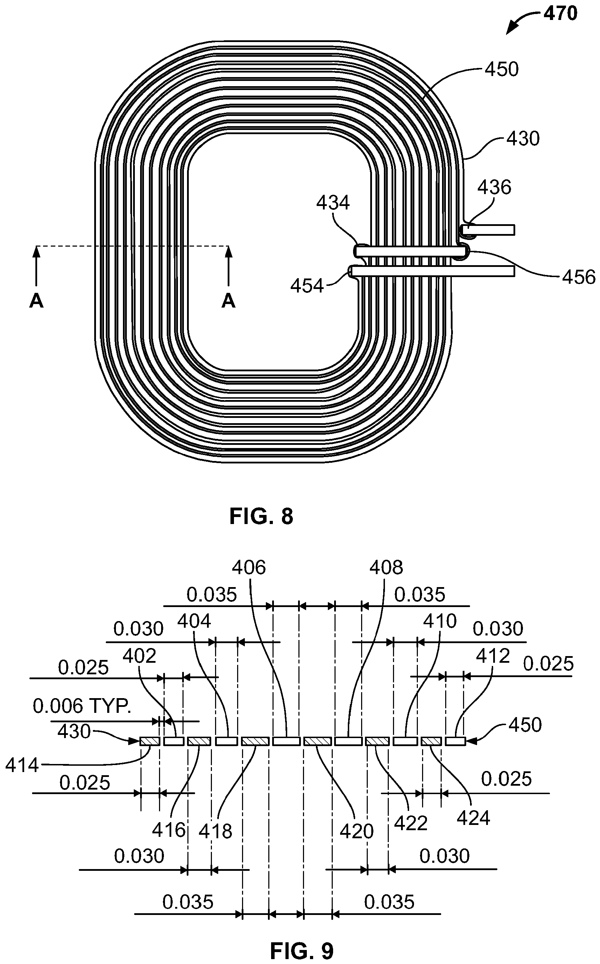

The tight tolerances and rectangular cross-sectional shape of the traces **130, 131** could result in a fill ratio (e.g., 85%) greater than current industry coils (e.g., 65%), such as wound coils, etched coils, etc. For example, the rectangular cross-sectional shape achieved from stamping (see **FIG. 9** below) provides a potentially greater fill ratio than the circular cross-sectional shape of a round wire (e.g., round copper wire). More specifically, a 0.010 in. diameter insulated round wire (0.009 diameter in. wire with 0.0005 in. insulation) could provide a 65% fill ratio, compared to a stamped coil with a rectangular cross section having a 0.006 thickness and 0.003 spacing gap. Further, the wireless charging coil **170** can operate under higher ambient temperatures than other current industry wires (e.g., Litz wire), and is not susceptible to degradation by vibration, shock, or heat. This is partly because the wireless charging coil 170 is made of a single-monolithic conductor (e.g., not a multi-strand wire). This can be compared to the individual strands of a Litz wire, which has insulation material separating each of the individual wire strands which cannot withstand higher temperatures.

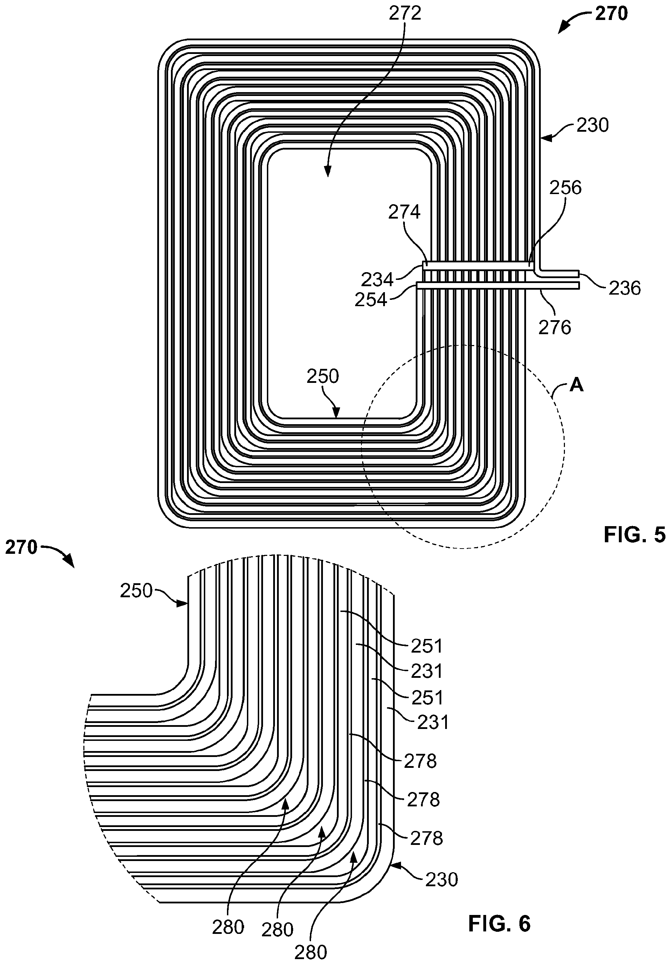

**FIG. 5** is a view of the assembled wireless charging coil **270** with jumpers attached. Although not shown, a jumper could be attached to the first outside end **236.** As shown, the inside end **234** of the first coil **230 is** electrically connected to the outside end **256** of the second coil **250** by a first jumper **274.** These ends **234, 256** are relatively proximate to one another, and disposed on the same side of the coil **270** to allow for a short jumper **274.** A second jumper **276** is then used to electrically connect the inside end **254** of the second coil with the mobile device circuitry. The outside end **236** and inside end **254** are relatively proximate and disposed towards the same side of the coil **270,** to provide for a short jumper **276** and for ease of electrical wiring with the electronic device. The result is a pair of parallel, closely spaced coils **230, 250** connected in series such that the first and second traces **230, 250** have parallel currents (e.g., the currents of each trace are in the same clockwise or counterclockwise direction).

When fully assembled with the other components of the electronic device, the inside portion **272** of the assembled coil **270** is insulated (e.g., by plastic and glue) to ensure proper performance. The assembled wireless charging coil **270** can have any number of windings, depending upon electrical requirements. The wireless charging coil **270** could be used in any battery powered device, such as smartphones. The assembled coil **270** could be of any suitable overall dimensions (e.g., 1.142 in. width and 1.457 in. height, etc.). The coil length could be of any suitable length (e.g., 48.459 in.).

**FIG. 6** is a close up view of portion A of **FIG. 5****.** As shown, there are very small gaps **278** (e.g., voids) between the trace **231** of the first coil **230** and the trace **251** of the second coil **250** (e.g., 0.003 in., 0.004 in., etc.), although there could be increased gaps **280** at the corners to account for the bends in the traces **231, 251** (e.g., such that the gap increase alternates). These tight tolerances could result in a fill ratio greater than current industry methods.

The assembled wireless charging coil **270** could provide direct current (DC) resistance (ohms), alternating current (AC) resistance, and/or AC/DC resistance ratios at a number of different values depending on the dimensions of the charging coil **270** and material(s) used in construction of the charging coil. The values could be adjusted to achieve high AC/DC ratios to meet induction standards. The coil dimensions could be varied to achieve varying resistance depending on the performance characteristics required. For example, for a resistance of 0.232 ohms using C110 alloy, the traces **230, 250** could have a cross section of 0.0001234 in.² (e.g., 0.005 in. thickness and 0.0246 in. width, or 0.004 in. thickness and 0.0308 in. width, etc.), and for a resistance of 0.300 ohms using C110 alloy, the traces **230, 250** could have a cross section of 0.0000953 in.² (e.g., 0.005 in. thickness and 0.019 in. width, or 0.004 in. thickness and 0.0238 in. width, etc.). The stamped wireless charging coil **270** can achieve a high trace thickness and/or high overall aspect ratio compared to other current industry methods (e.g., printed circuit board (PCB) etched coils).

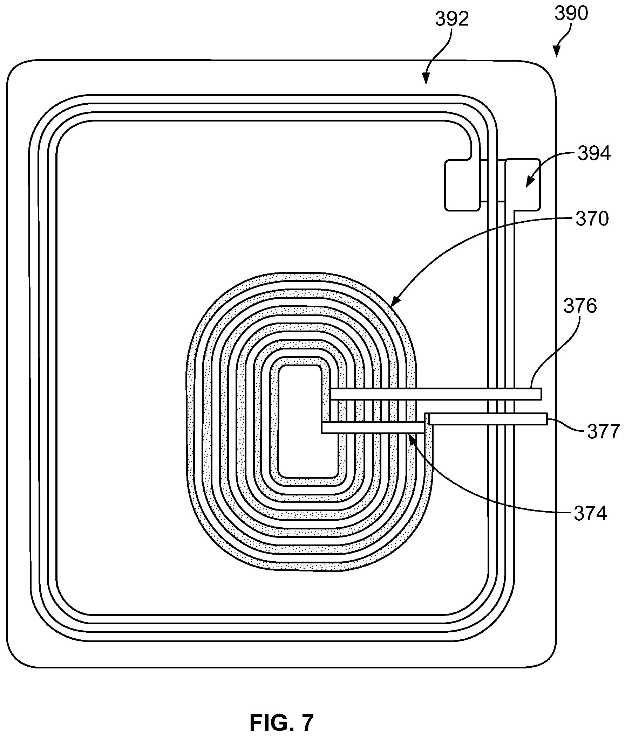

**FIG. 7** is a view of an electrical component assembly **390** including a wireless charging coil **370.** More specifically, the wireless charging coil **370** is attached to ferrite substrate **392** and in conjunction with a near field communication (NFC) antenna **394** having contact paddles. The wireless charging coil **370** and NFC antenna **394** could have contact pads (e.g., gold) to connect the wireless charging coil **370** and NFC antenna **394** to the circuitry of the mobile device. The assembly comprises a first jumper **374,** a second jumper **376,** and a third jumper **377** connecting the various ends of the coil **370,** as explained above in more detail. There could be a film (e.g., clear plastic) over the wireless charging coil **370** and NFC antenna **394,** with the jumpers **374, 376, 377** on top of the film and only going through the film at the points of connection. This prevents accidentally shorting any of the electrical connections of the coil **370.** Alternatively, the jumpers **374, 376, 377** could be insulated so that a film is not needed. To minimize space, the wireless charging coil **370** is within the NFC antenna **394** with jumpers **376, 377** that extend to the outside of the NFC antenna **394.** However, the wireless charging coil **370** and jumpers **376, 377** could be placed at any location relative to the NFC antenna **394.**

The total thickness of the assembly could vary depending on various potential needs and requirements. For example, the jumpers could be 0.05-0.08 mm thick, the film could be 0.03 mm thick, the NFC antenna **394** and coil **370** could be 0.08 mm thick, and the ferrite **392** could be 0.2 mm thick for a total wireless charging coil thickness of approximately 0.36 mm.

**FIG. 8** is a schematic view of an assembled wireless charging coil **470** with planar bifilar coils. As discussed above, the wireless charging coil **470** includes a first coil **430** (e.g., trace) and a second coil **450** (e.g., trace). The assembled coil **470** is manufactured and operates in the manner discussed above with respect to **FIGS. 1-7****.** The first coil **430** and the second coil **450** can have any desired thickness, such as to meet different power requirements. The first coil **430** and second coil **450** could be connected in series or parallel.

The width of the first and/or second coil **430, 450** could vary along the length of the coil to optimize performance of the assembled wireless charging coil **470.** Similarly, the thickness of the first and second coils **430, 450** could change over the length of the coil. For example, the width (and/or thickness) of the first coil **430** could gradually increase (or narrow) from a first end **434** towards a middle of the coil **430,** and the width (and/or thickness) could likewise gradually narrow (or increase) from the middle to the second end **436** of the coil **430** (e.g., a spiral coil of wide-narrow-wide), thereby varying the cross-sectional area throughout. Any variation of width (e.g., cross-section) or thickness could be used, and/or these dimensions could be maintained constant over portions of the coil, according to desired performance characteristics .

Additionally (or alternatively), the spaces between the windings of the coil could be varied to optimize performance of the wireless charging coil **470.** For example, the gap width between the traces could be wider towards the outside of the first coil **430** and narrower towards the inside of the first coil **430** (or the opposite). Similarly, the distance between the first coil **430** and second coil **450** in the assembled coil **470** could also be varied to optimize performance. Further, the geometry of the edges of the coil could be varied (e.g., scalloped, castellated, etc.), such as to reduce eddy currents.

**FIG. 9** is a cross-sectional view of a portion of the wireless charging coil of **FIG. 8****.** The first coil **430** comprises sections **414-424** and the second coil **450** comprises sections **402-412.** As shown, the cross-section of the first coil **430** becomes gradually wider and then narrower from a first end to a second end of the first coil **430.** As a result, sections **414** and **424** are the narrowest (e.g., 0.025 in.), followed by sections **404** and **422** (e.g., 0.030 in.), and sections **418** and **420** are the widest (e.g., 0.035 in.). In the same way, the cross-section of the second coil **450** becomes gradually wider and then narrower from a first end to a second end of the second coil **450.** As a result, sections **402** and **412** are the narrowest, and sections **406** and **408** are the widest. Changes in the dimensions of the cross section of the antenna can likewise be varied in other manners.

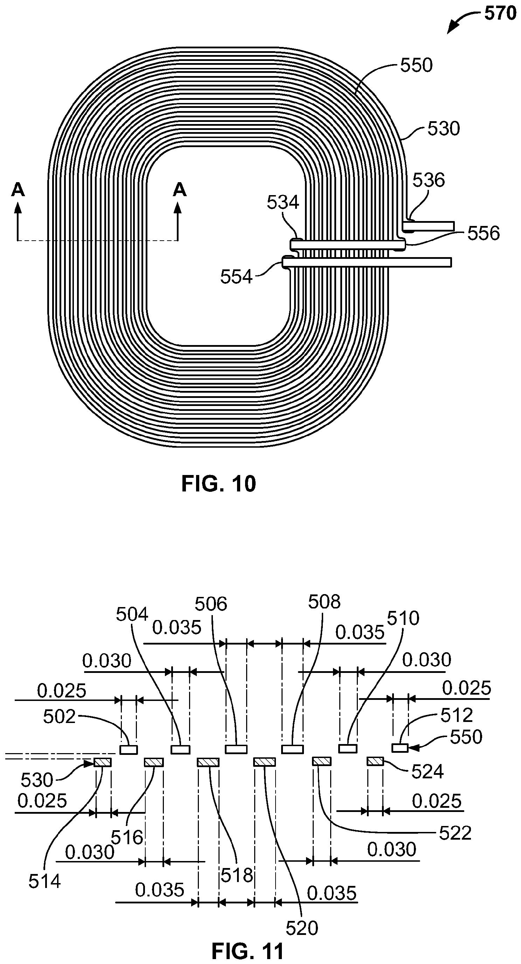

**FIG. 10** is a schematic view of an assembled wireless charging coil **570** with stacked bifilar coils. As discussed above, the wireless charging coil **570** includes a first coil **530** and a second coil **550.** The assembled coil **570** is manufactured and operates in the manner discussed above with respect to **FIGS. 1-7****,** as well as that discussed in **FIGS. 8-9****,** except that the first and second coils **530, 550** are stacked instead of planar. The first coil **530** includes a first end **534** and a second end **536,** and the second coil **550** includes a first end **554** and a second end **556.** Further, varying the skew or offset (e.g., stacking distance) of the first coil **530** relative to the second coil **550** can affect the performance of the wireless charging coil **570.** The first coil **530** and second coil **550** could be connected in series or parallel.

**FIG. 11** is a cross-sectional view of a portion of the wireless charging coil of **FIG. 10****.** This coil **570** is similar to that of **FIGS. 8-9****,** including a first coil **530** with sections **514-524** and a second coil **550** with sections **502-512,** except that the first and second coils **530, 550** are stacked instead of planar.

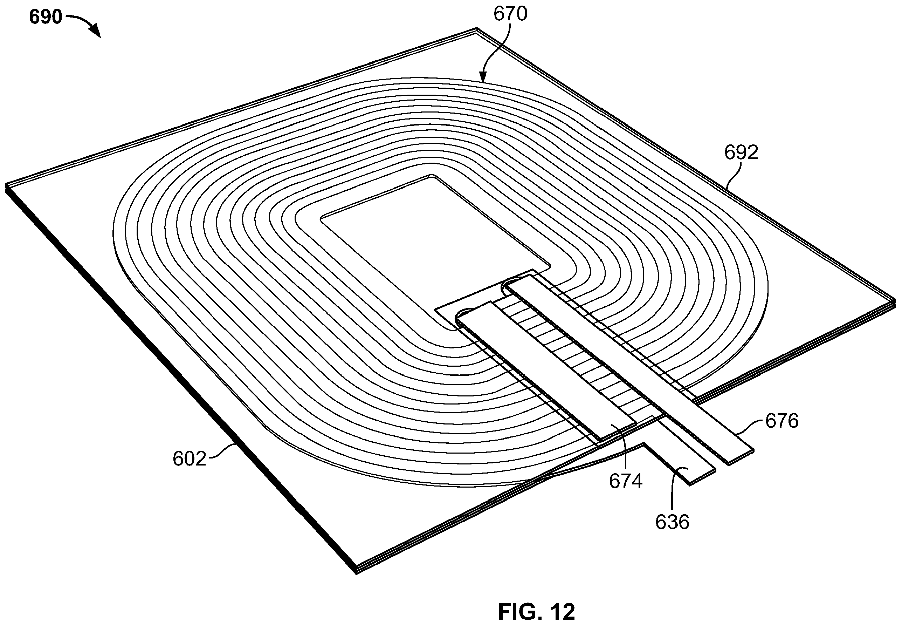

**FIGS. 12-13** are views showing an electrical component assembly **690.** More specifically, **FIG. 12** is a perspective view of an electrical component assembly **690.** The electrical component assembly **690** comprises a ferrite shield **692,** a pressure sensitive adhesive (PSA) layer **602** positioned on the ferrite shield **692,** an assembled coil **670** (e.g., bifilar coil) positioned therebetween, and jumpers **674, 676** positioned on the PSA layer **602.**

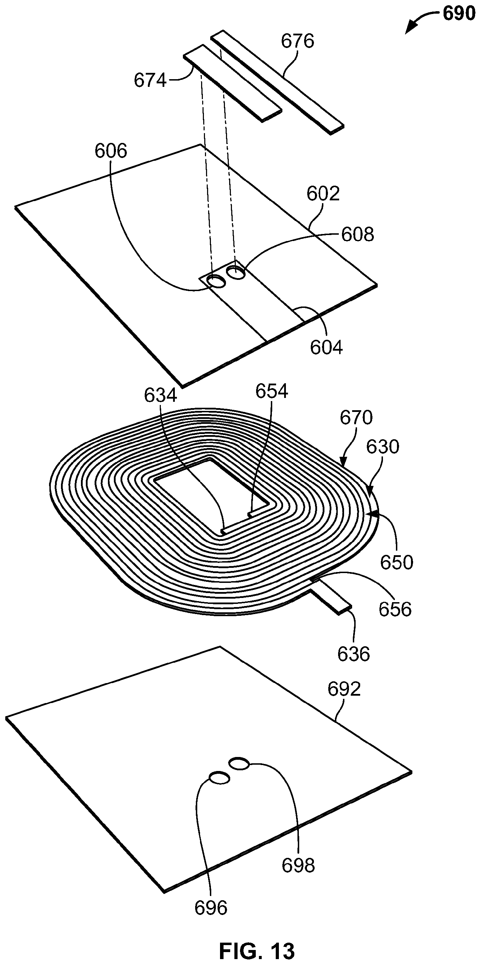

**FIG. 13** is an exploded view of the electrical component assembly **690** of **FIG. 12****.** The bifilar coil **670** includes a first coil **630** having an inside end **634** and an outside end **636** interconnected with a second coil **650** having an inside end **654** and an outside end **656.** The inside and outside ends are on the same side of the assembled coil **670** for ease of use and assembly (e.g., minimize the distance to electrically connect the ends).

Ferrite shield **692** includes a first hole **696** and a second hole **698** positioned to correlate with the placement of the inside end **634** of the first coil **630** and the inside end **654** of the second coil **650** (e.g., when the coil **670** is placed onto the ferrite shield **692.** Although holes **696, 698** are shown as circular, any shape and size openings could be used (e.g., one rectangular opening, etc.). These holes **696, 698** facilitate assembly and welding of the electrical component assembly **690.**

PSA layer **602** and ferrite shield **692** are similarly sized to one another, and although shown as rectangular, both could be of any shape (e.g., circular). PSA layer secures the relative placement of the assembled coil **670** to the ferrite shield **692.** PSA layer **602** could have adhesive on one or both sides, and could include a polyethylene terephthalate (PET) film area **604** free of adhesive on one or both sides. PET film area **604** facilitates assembly and welding of the electrical component assembly **690**

PSA layer **602** includes a first hole **606** and a second hole **608** in the PET film area **608** which correlate in position with the placement of the inside end **634** of the first coil **630** and the inside end **654** of the second coil **650** (as well as the first hole **696** and second hole **698** of the ferrite substrate **692**). Although holes **606, 608** are shown as circular, any shape and size openings could be used (e.g., one rectangular opening). Holes **606, 608** provide access through the PSA layer **602** to electrically connect jumpers **674, 676** with the inside ends **634, 654** of the assembled coil **670.** The PET film area **604** facilitates attachment of the jumpers **674, 676** to the assembly **690.**

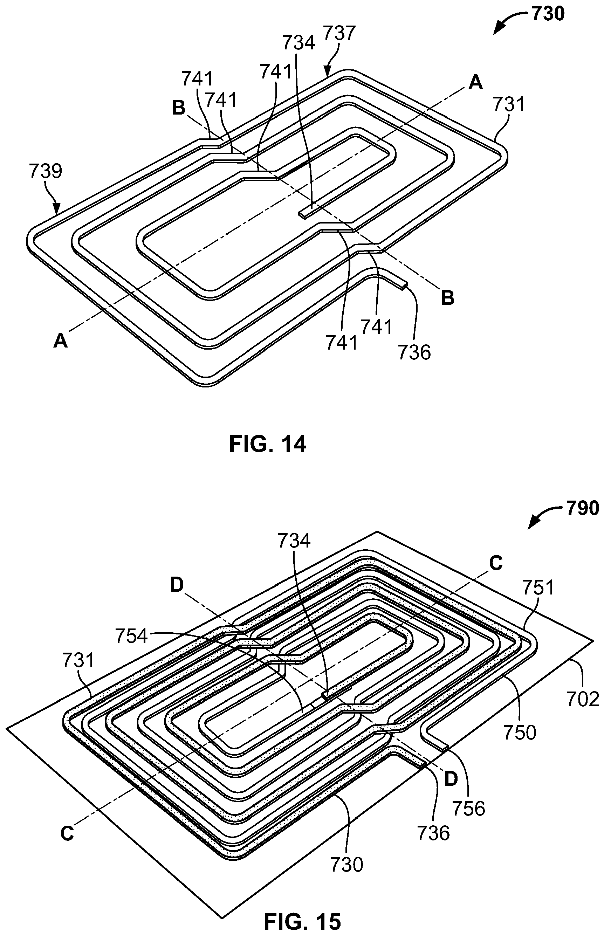

**FIG. 14** is a perspective view of a resonant coil **730.** Resonant coil **730** could be a generally rectangular planar spiral trace **731,** although the trace **731** could form any suitable shape. The resonant coil **730** includes an inside end **734** and an outside end **736.** The trace **731** is stamped on a strip or sheet of metal (e.g., copper, aluminum, etc.). The dimensions of the coil **730** could vary depending on the application of the coil **730.** The coil **730** could be of any suitable thickness, and of any suitable overall dimensions. The trace **731** could also be of any suitable dimensions. The dimensions could vary depending on physical and performance requirements. The coil **730** could be made of any suitable material for wireless power transfer, such as, for example, copper, copper alloy, aluminum, aluminum alloy, tempered copper alloy (e.g., C110), etc. The gaps between the windings of the trace **731** are larger for a resonant coil than for other types of inductive coils due to performance requirements.

Stamping provides a scalable process for high volume production with high yields. The stamped trace **731** is not prone to unwinding and can allow for a thicker trace. This is advantageous compared with other existing technologies. For example, winding wire (e.g., copper) to a specific pattern on a surface is difficult and the wound wire can unwind. Further, etched copper is expensive and could be limited to a maximum thickness (e.g., 0.004 in. thick).

The trace **731** of the resonant coil **730** includes a first side **737** and a second side **739** offset from the first side **737** by angled portions **741** of the trace **731.** The angled portions **741** are aligned with one another (e.g., occur along line B-B), and angled in the same direction. In other words, angled portions **741** are all angled toward a particular side of the coil **730** (e.g., towards one side of line A-A), such that a first portion **737** (e.g., upper portion) of the coil **730** is shifted relative to a second portion **739** (e.g., lower portion) of the coil **730.**

**FIG. 15** is a perspective view of a resonant coil assembly **790,** including the first resonant coil **730** from **FIG. 14****.** The resonant coil assembly **790** includes a first coil **730** and a second coil **750,** which are identical to one another (which minimizes manufacturing costs). The resonant coil assembly **790** could be laminated such that the first coil **730** and second coil **750** are laminated to a film **702** (e.g., PET film), such as by an adhesive (e.g., heat activated, pressure sensitive, etc.) to provide more stability in downstream operations. The first coil **730** could be adhered to one side of the film **702** and the second coil **750** could be adhered to the opposite side of the film **702.**

The first coil **730** includes an outside end **736** and an inside end **734,** and the second coil **750** includes an outside end **756** and an inside end **754.** The first coil **730** and second coil **750** could be exactly the same size and shape coil, except that the second coil **750** is rotated 180 degrees about line D-D. In this way, the trace **731** of the first coil **730** is positioned between the gap formed by the windings of the trace **751** of the second coil **750** (and vice-versa), except at the angled portions of each coil along line **D-D,** where the traces cross one another. The inside end **734** of the first coil **730** could be adjacent to (and in electrical connection with) the inside end **754** of the second coil **750,** and the outside end **736** of the first coil **730** could be adjacent to the outside end **756** of the second coil **750.**

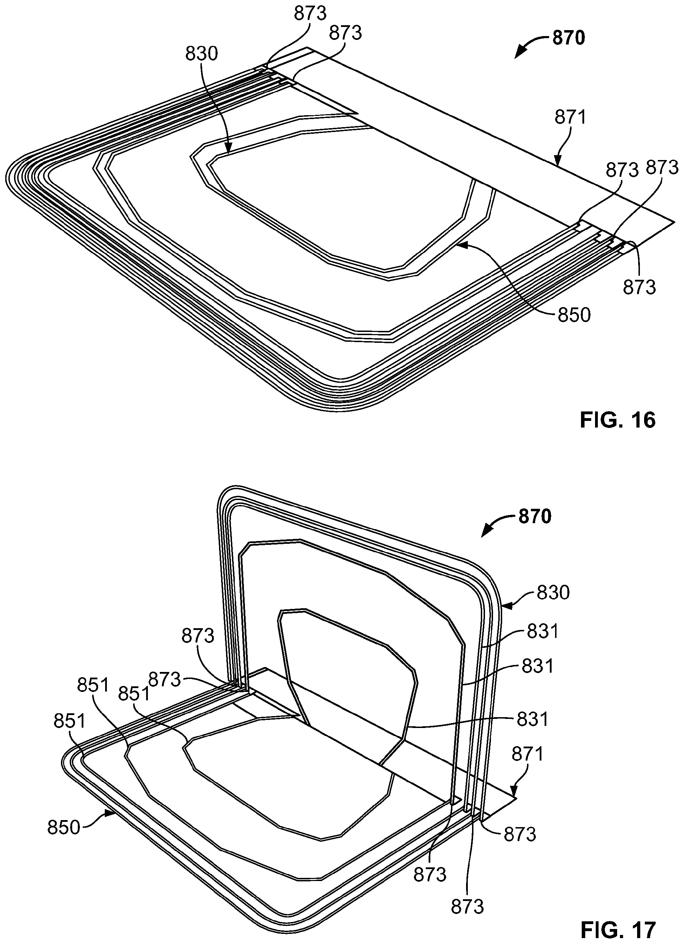

**FIGS. 16-18** are views of a stamped resonant coil **870.** **FIG. 16** is a perspective view of a folded stamped resonant coil **870.** The coil **870** comprises connector sheet **871,** a first set of traces **831** of a first coil portion **830** with ends thereof connected to an edge of the connector sheet **871** at connection points **873,** and a second set of traces **851** of a second coil portion **850** with ends thereof connected to the same edge of the connector sheet **871** at connection points **873.** To create the stamped resonant coil **870,** a (single) sheet of metal is stamped to form the first set of traces **831** and the second set of traces **851** (e.g., such that the arcs of each trace of the first and second sets of traces **831, 851** are oriented in the same direction). The ends of the first and second set of traces **831, 851** are then connected to the same edge of connector sheet **871** (e.g., insulation material). The connector sheet **871** facilitates wiring of the sets of traces **831, 851** to each other, as well as facilitates the connection of the stamped resonant coil **870** to electronic circuitry. The ends of the first and second set of traces **831, 851** are then wired to each other, such as by using a series of jumpers and/or traces. For example, the jumpers and/or traces could be in the connector sheet **871** and could run parallel to the connector sheet (and perpendicular to the first and second sets of traces **831, 851**).

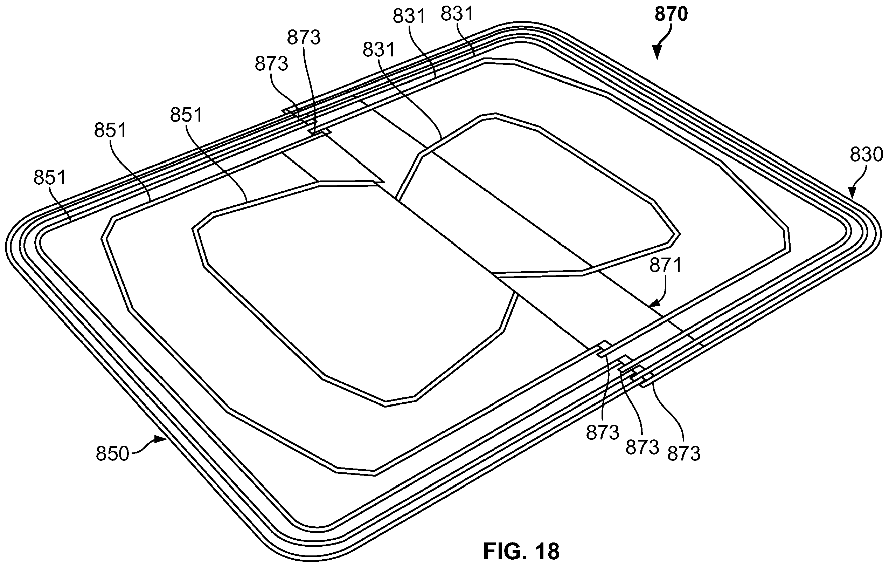

**FIG. 17** is a perspective view of the coil **870** of **FIG. 16** partially opened. As shown, the first set of traces **831** of the first coil portion **830** are bent at connection points **873.** **FIG. 18** is a perspective view of the coil **870** of **FIG. 16** fully opened. As shown, the first set of traces **831** of the first coil portion **830** continue to be bent at connection points **873** until the first coil portion **830** is planar with the second coil portion **850.** Bending of the traces could result in fracturing on the outside surface thereof, in which case, ultrasonic welding could be used to ensure electrical conductivity. Alternatively, the first and second sets of traces **831, 851** could connect to opposing edges of the connector sheet **871,** such that bending could not be required. Stamping (and bending) in this way reduces the amount of scrap generated, thereby increasing material utilization.

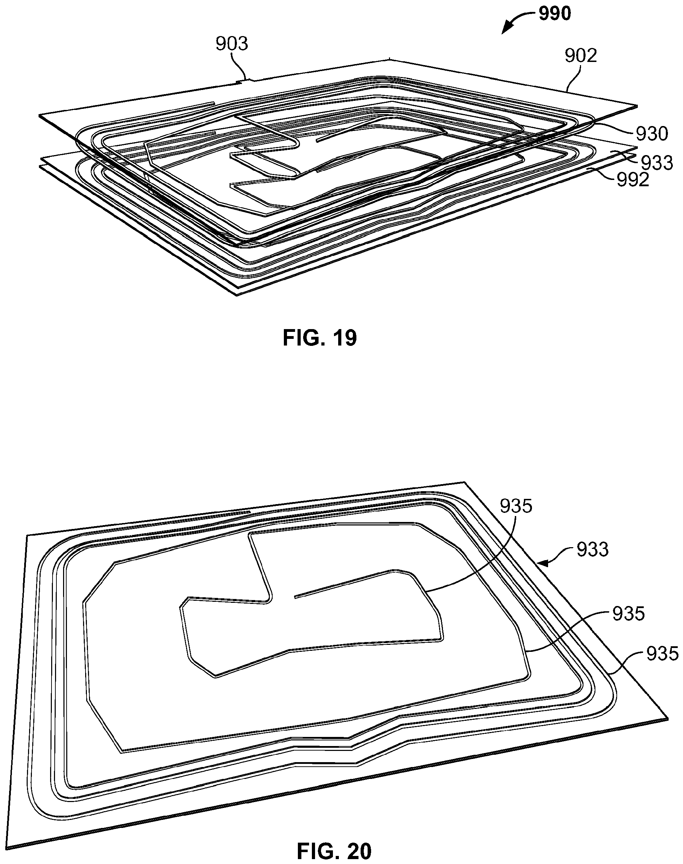

**FIG. 19** is an exploded view of a low profile electrical component assembly **990.** More specifically, the low profile electrical component assembly **990** comprises a substrate **992** (e.g., PET layer), a filler material layer **933** (e.g., rubber, foam, durometer, etc.), a coil **930** (e.g., resonant coil), and a protective layer **902.** The protective layer **902** could be partly translucent and could comprise a tab (e.g., for applying or removing).

**FIG. 20** is a perspective view of the filler material **933** of **FIG. 19****.** Filler material **933** comprises grooves **935** which correspond in size and shape to that of the coil **930.** In this way, the coil **930** is nested in filler material **933,** which protects the coil shape from bending and/or deformation. Such an assembly facilitates handling of the coil **930** for subsequent operations.

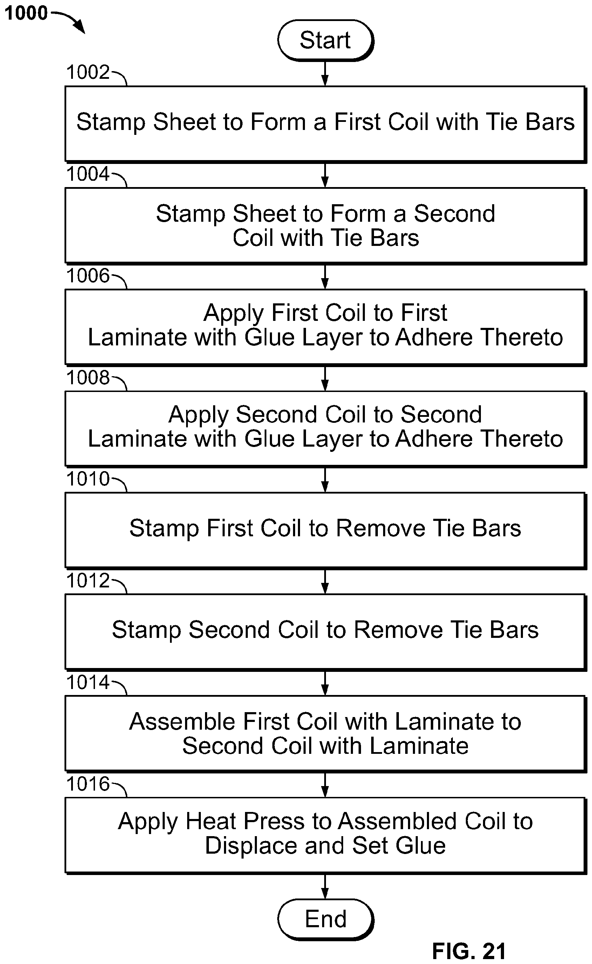

**FIG. 21** is a diagram showing processing steps **1000** for manufacturing a wireless charging coil with adhesive (e.g., glue). In step **1002,** a metal sheet is stamped to form a first coil with tie bars. In step **1004,** a metal sheet is stamped to form a second coil with tie bars. In step **1006,** a first coil is applied to a first laminate (e.g., plastic substrate, Transilwrap) with an adhesive layer to adhere thereto. In step **1008,** a second coil is applied to a second laminate (e.g., plastic substrate, Transilwrap) with an adhesive layer to adhere thereto. In step **1010,** the first coil is stamped to remove tie bars. In step **1012,** the second coil is stamped to remove tie bars. Accordingly, the first coil and second coil are fixed in place as a result of the adhesive layer on the plastic laminate. In step **1014** the first coil with the laminate adhered thereto, is assembled with the second coil with the laminate adhered thereto. More specifically, as discussed above, the first coil with a spiral trace fits into the space formed between a trace of a second coil , and conversely, the second coil fits into the space formed between the trace of the first coil, thereby forming an assembled coil. As a result, the assembled coil is positioned between (e.g., sandwiched between) the first laminate and the second laminate.

In step **1016,** a heat press is applied to the assembled coil to displace and set the adhesive layer from the first and second laminates. More specifically, the heat applied should be hot enough to melt the adhesive (e.g., more than 220-250 °F), but not hot enough to melt the plastic laminate. The pressure applied pushes the first coil towards the second laminate, such that the adhesive of the second laminate positioned in between the trace of the second coil is displaced and forced between the spaces between the first trace of the first coil and the second trace of the second coil. Squeezing the first and second coils together (e.g., with heat and/or pressure) migrates the adhesive to the spaces in between the traces (e.g., to insulate them from one another). This covers or coats the traces of the first coil and the second coil, and bonds the first coil to the second coil. The pressure, heat, and duration could vary depending on the desired cycle time for manufacturing the assembled coil. It is noted that such a process could result in a planar offset of the first coil from the second coil when assembled together.

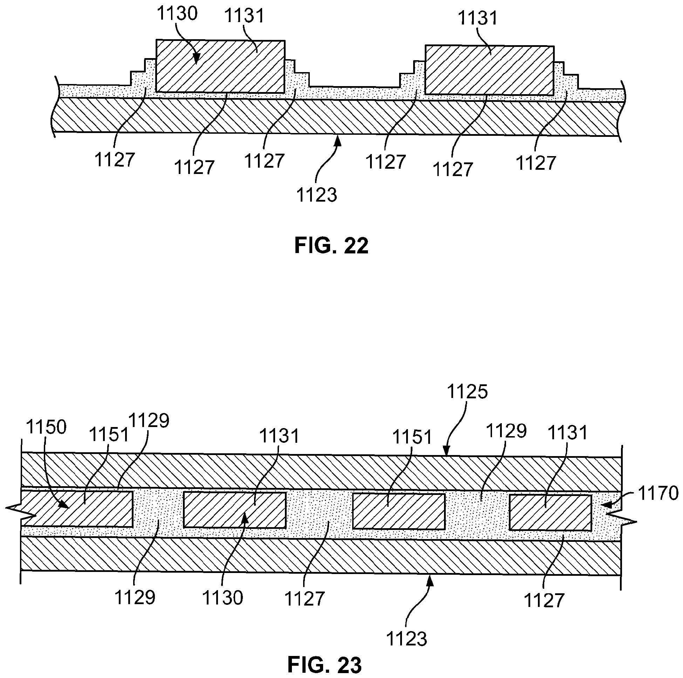

**FIG. 22** is a partial cross-sectional view of a first stamped coil **1130** when applied to a first laminate **1123.** The first laminate **1123** includes an adhesive layer **1127** applied to a surface thereof. When the first stamped coil **1130** is applied to the first laminate **1123,** some of the adhesive **1127** is displaced to the sides, such that the displaced adhesive **1127** accumulates against the sides of the trace **1131** of the first stamped coil **1130.** Accordingly, the adhesive **1127** on the sides and underneath the trace **1131** of the first stamped coil **1130** prevents the trace **1131** from moving relative to the first laminate **1123.**

**FIG. 23** is a partial cross-sectional view of an assembled coil positioned between a first laminate **1123** and second laminate **1125.** As described above, when assembled, the first coil **1130** with a first trace **1131** fits into the space formed between a second trace **1151** of a second coil **1150,** and conversely, the second coil **1150** fits into the space formed between the first trace **1131** of the first coil **1130,** thereby forming an assembled coil **1170.** As a result, the assembled coil **1170** is positioned between (e.g., sandwiched between) the first laminate **1123** and the second laminate **1125.** This displaces the first adhesive **1127** between the first trace **1131** of the first coil **1130,** and displaces the second adhesive **1129** between the second trace **1151** of the second coil **1150.**

When the first and second adhesive layers **1127, 1129** are set (e.g., by pressure and/or heat), the adhesive covers the surface of the traces **1131, 1151** (e.g., by melting), and acts as an insulator and stabilizer for the traces **1131, 1151.** In other words, the first and second coils **1130, 1150** are bonded together. This prevents relative movement of the traces **1131, 1151,** which prevents the first stamped coil **1130** from contacting the second stamped coil **1150** and shorting out the assembled coil **1170.** As an example, the first and second stamped coils **1130, 1150** could each be 0.0125 in. thick, and each adhesive layer **1127, 1129** could be 0.0055 in. thick, for a total thickness of 0.0225 in. After pressure and/or heat have been applied, the total thickness could be 0.0205 in., with a total adhesive displacement of 0.002 in.

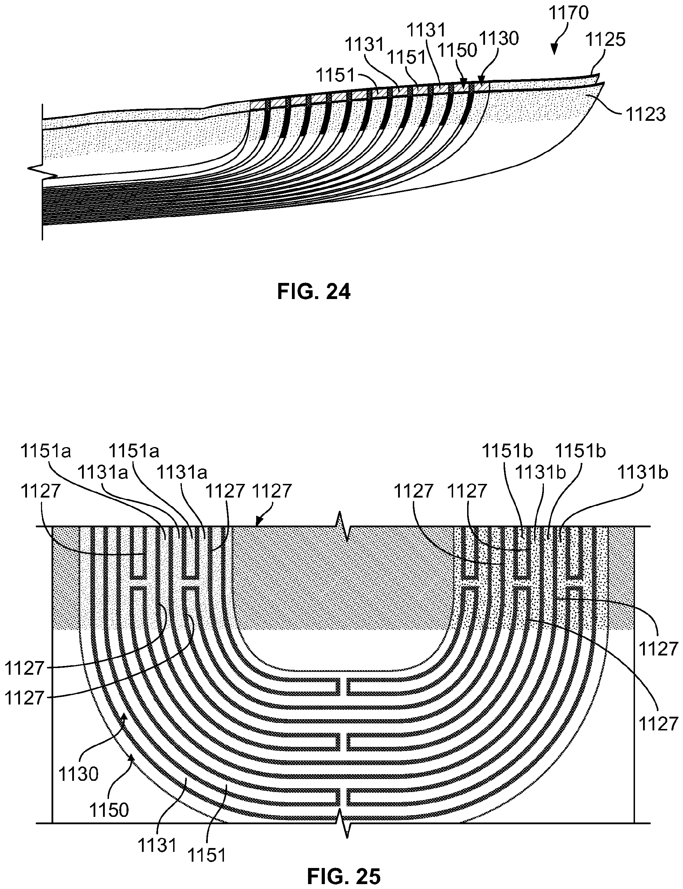

**FIGS. 24-25** are partial views of an assembled coil **1170.** More specifically, **FIG. 24** is partial cross-sectional view of an assembled coil **1170,** and **FIG. 25** is a partial top view of the assembled coil **1170** of **FIG. 24****.** As described in detail above, the first stamped coil **1030** includes a planar spiral trace **1031,** which spirals to form an inside portion **1032** at the center of the coil **1030.** The assembled coil **1170** comprises (as discussed above) a first coil **1130** with a spiral trace **1131,** which fits into the space formed between a trace **1151** of a second coil **1150,** and conversely, the second coil **1150** fits into the space formed between the trace **1131** of the first coil **1130.** Accordingly, the first and second coils **1130, 1150** form a parallel planar spiral.

As discussed above, a first laminate **1123** (e.g., Transilwrap) with a first adhesive layer is applied to the first stamped coil **1130,** and a second laminate **1125** (e.g., Transilwrap) with a second adhesive layer applied to the second stamped coil **1150.** As a result, the first and second stamped coils **1130, 1150** are positioned between the first and second laminates **1123, 1125.** When the first and second coils **1130, 1150** are assembled with one another, the adhesive **1127** (dyed black for clarity) is displaced to fill the spaces between the first and second traces **1131, 1151.**

**FIG. 25** shows the displacement of adhesive **1127** when the first coil **1130** and second coil **1150** are assembled. More specifically, the adhesive **1127** (dyed black for clarity) is shown between the first trace **1131** and the second trace **1151.** Further, in the particular example shown, more pressure has been exerted on the left side first and second traces **1131a, 1151a,** than the right side traces **1131b, 1151b.** As a result, less adhesive **1127** has been displaced on the right side than the left side, thereby making the right side trace **1151b** less visible than the left side trace **1151a** (as a result of the black dyed adhesive **1127**).

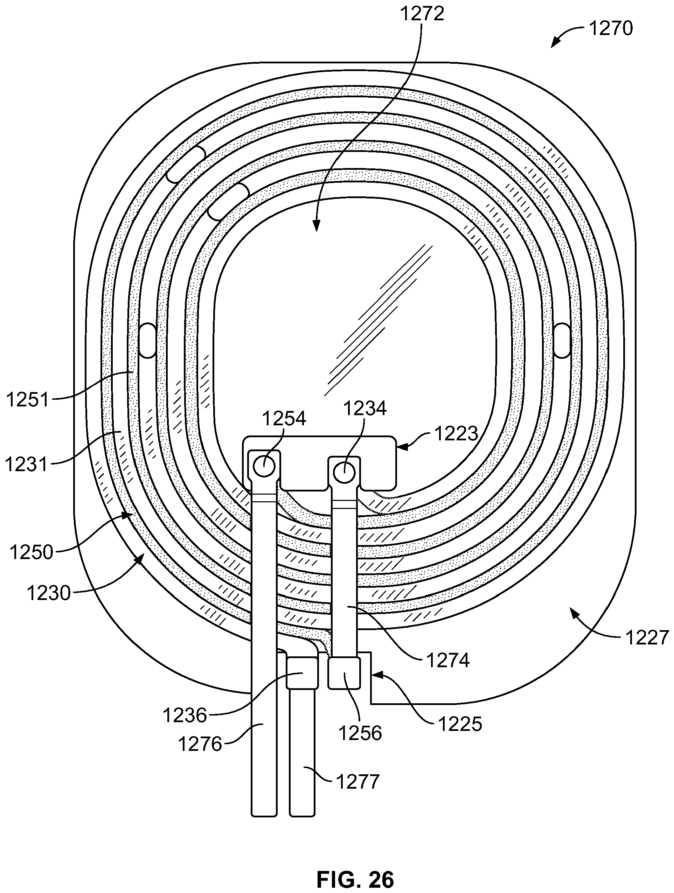

**FIG. 26** is a top view of an assembled coil **1270** of the present disclosure. As discussed above, the assembled coil **1270** comprises a first coil **1030** with a first spiral trace **1031** having an inside end **1034** and an outside end **1036,** a second coil **1050** with a second spiral trace **1051** having an inside end **1054** and an outside end **1056,** a first jumper **1277** attached to the outside end **1236** of the first coil **1230,** a second jumper **1274** attached to the inside end **1234** of the first coil **1230** and the outside end **1256** of the second coil **1250,** and a third jumper **1276** attached to the inside end **1254** of the second coil **1250.** The first and second spiral coils **1030, 1050** forming an inside portion **1272.**

A laminate **1227** (e.g., film, adhesive film, plastic film, etc.) covers the assembled coil **1270** including the inside portion **1272.** As explained above, the adhesive layer of the laminate **1227** stabilizes the first coil **1230** and second coil **1250** and insulates them. This prevents relative movement of the first and second coil **1230, 1250** and prevents the first and second coils **1230, 1250** from accidentally contacting one another and shorting out the assembled coil **1270**

The laminate **1227** could define one or more cutouts. More specifically, the laminate **1227** could define an inside cutout **1223** to provide access to (e.g., expose) the first inside end **1234** of the first coil **1230** and the second inside end **1254** of the second coil **1250.** The laminate **1227** could also define an outside cutout **1225** to provide access to (e.g., expose) the first outside end **1236** of the first coil **1230** and the second outside end **1256** of the second coil **1250.** The first cutout **1223** could extend to substantially of the inside portion **1272.** The assembled coil **1270** (and the first and second coils **1230, 1250** thereof) could be of any material and/or style (e.g., A6 style coil).

For any of the embodiments discussed above, the wireless charging coil (e.g., bifilar coil) could be constructed and then (e.g., at a different location and/or time) the first and second coils of the wireless charging coil, whether stacked or planar, could be electrically connected to each other in series or parallel depending on electrical requirements.

Having thus described the system and method in detail, it is to be understood that the foregoing description is not intended to limit the spirit or scope thereof. It will be understood that the embodiments of the present disclosure described herein are merely exemplary and that a person skilled in the art may make any variations and modification without departing from the spirit and scope of the disclosure. All such variations and modifications, including those discussed above, are intended to be included within the scope of the disclosure.

### Further Embodiments are described in the following

1. A wireless charging coil comprising:
   a first stamped coil having a first spiral trace, the first spiral trace defining a first space between windings; and
   a second stamped coil having a second spiral trace, the second spiral trace defining a second space between windings,
   the first stamped coil and second stamped coil in co-planar relation, the first stamped coil positioned within the second space of the second stamped coil, and the second stamped coil positioned within the first space of the first stamped coil, the first and second coils electronically connected; and
   an adhesive covering and surrounding the first stamped coil and the second stamped coil to bond the coils together and to insulate the coils.
2. The wireless charging coil of 1, further comprising a first laminate and a second laminate, wherein the first stamped coil and the second stamped coil are positioned between the first laminate and the second laminate.
3. The wireless charging coil of 1, wherein the first stamped coil and second stamped coil are connected in series.
4. The wireless charging coil of 1, wherein the first stamped coil and second stamped coil are connected in parallel.
5. The wireless charging coil of 1, wherein the first stamped coil includes an inside end and an outside end, the inside end disposed on the same side of the first stamped coil as the outside end.
6. The wireless charging coil of 5, further comprising a first jumper attached to the outside end of the first coil.
7. The wireless charging coil of 6, wherein the second stamped coil includes an inside end and an outside end, and further comprising a second jumper attached to the inside end of the first coil and the outside end of the second coil.
8. The wireless charging coil of 7, further comprising a third jumper attached to the inside end of the second coil.
9. A method of making a wireless charging coil comprising:
   stamping a metal sheet to form a first coil having a first spiral trace, the first spiral trace defining a first space between windings;
   applying the first stamped coil to a first laminate via an adhesive thereof;
   stamping a metal sheet to form a second coil having a second spiral trace, the second spiral trace defining a second space between windings;
   applying the second stamped coil to a second laminate via an adhesive thereof;
   interpositioning the first stamped coil and the second stamped coil to form a planar coil assembly with the first stamped coil positioned within the second space of the second stamped coil, and the second stamped coil positioned within the first space of the first stamped coil, and the first stamped coil and the second stamped coil positioned between the first and second laminates;
   heating and pressing the planar coil assembly to displace and set the adhesive of the first and second laminates to surround and bond together the first and second coils.
10. The method of 9, wherein heat applied by the heat press melts the adhesive but does not melt the laminate.
11. The method of 10, wherein pressure applied by the heat press displaces and forces the adhesive between the first trace of the first coil and the second trace of the second coil to insulate the coils.
12. The method of 9, wherein stamping the metal sheet forms the first coil with tie bars.
13. The method of 12, further comprising stamping the first coil to remove the tie bars.
14. The method of 9, wherein the first stamped coil and second stamped coil are connected in series.
15. The method of 9, wherein the first stamped coil and second stamped coil are connected in parallel.
16. The wireless charging coil of 9, wherein the first stamped coil includes an inside end and an outside end, the inside end disposed on the same side of the first stamped coil as the outside end.
17. The wireless charging coil of 16, further comprising a first jumper attached to the outside end of the first coil.
18. The wireless charging coil of 17, wherein the second stamped coil includes an inside end and an outside end, and further comprising a second jumper attached to the inside end of the first coil and the outside end of the second coil.
19. The wireless charging coil of 18, further comprising a third jumper attached to the inside end of the second coil.

## Claims

1. A wireless charging coil comprising:
a first stamped coil having a first spiral trace with a rectangular cross-section, the first spiral trace defining a first space between windings; and
a second stamped coil having a second spiral trace with a rectangular cross-section, the second spiral trace defining a second space between windings,
wherein the first stamped coil and second stamped coil are interconnected with one another and positioned in the same plane with the first stamped coil positioned within the second space of the second stamped coil and the second stamped coil positioned within the first space of the first stamped coil, the first spiral trace and the second spiral trace having a fill ratio greater than 65%.

2. The wireless charging coil of Claim 1, wherein the first stamped coil and second stamped coil are connected in series.

3. The wireless charging coil of Claim 1, wherein the first stamped coil and second stamped coil are connected in parallel.

4. The wireless charging coil of any one of claims 1 to 3, wherein the first stamped coil includes an inside end and an outside end, the inside end disposed on the same side of the first stamped coil as the outside end.

5. The wireless charging coil of any one of claims 1 to 4, wherein a width of the first trace varies along a length of the first stamped coil.

6. The wireless charging coil of any one of claims 1 to 5, wherein a thickness of the first trace varies along a length of the first stamped coil.

7. The wireless charging coil of any one of claims 1 to 6, wherein a width of the space between windings of the first spiral trace of the first stamped coil varies.

8. The wireless charging coil of any one of claims 1 to 7, wherein the first and second traces have a thickness between 0.003 inches and 0.020 inches.

9. The wireless charging coil of any one of claims 1 to 8, wherein the first and second traces have a width between 0.005 inches and 0.250 inches.

10. The wireless charging coil of any one of claims 1 to 9, wherein the first and second coils each include an inside end and an outside end, the inside end of the first coil disposed on a same side of the wireless charging coil as the outside end of the second coil, and further comprising a jumper electrically connecting the inside end of the first coil with the outside end of the second coil.

11. The wireless charging coil of any one of claims 1 to 10, further comprising a ferrite substrate, the first and second coils applied to the ferrite substrate.

12. The wireless charging coil of any one of claims 1 to 11, wherein the fill ratio is approximately 85%.

13. The wireless charging coil of any one of claims 1 to 12, comprising:
a first laminate attached to the first stamped coil and fixing the first stamped coil in place; and
a second laminate attached to the second stamped coil and fixing the second stamped coil in place,
wherein the first laminate is engaged with the second laminate to bond the coils together and to insulate the coils.

14. A wireless charging coil comprising:
a stamped coil having a spiral trace, an inside end, and an outside end;
a jumper, the jumper electrically connected to the inside end of the stamped coil and extending across the stamped coil;
a first layer having an adhesive, the adhesive adhering the stamped coil to the first layer and securing the stamped coil in place; and
a second layer positioned over the stamped coil and adhered to the first layer by the adhesive,
wherein the stamped coil is positioned between the first layer and the second layer, and
wherein the stamped coil has a fill ratio greater than 65%.

15. The wireless charging coil of Claims 14, wherein the jumper and the outside end of the stamped coil extend beyond the first layer and the second layer.

16. The wireless charging coil of Claims 14 or 15, wherein the outside end of the stamped coil defines a first terminal and at least a portion of the jumper defines a second terminal.

17. The wireless charging coil of any of Claims 14 to 16, wherein the stamped coil is of a generally rectangular shape.

18. The wireless charging coil of any of Claims 14 to 17, wherein the second layer is a ferrite shield.

19. The wireless charging coil of Claim 18, wherein the adhesive secures the stamped coil in a relative placement to the ferrite shield.

20. The wireless charging coil of any of Claims 14 to 19, wherein the fill ratio of approximately 85%.

21. The wireless charging coil of any of Claims 14 to 20, wherein the spiral trace has a thickness between 0.003 inches and 0.020 inches.

22. The wireless charging coil of any of Claims 14 to 21, wherein the spiral trace has a width between 0.005 inches and 0.250 inches.

23. A wireless charging coil comprising:
a first stamped coil having a first spiral trace, the first spiral trace defining a first space between windings; and
a second stamped coil having a second spiral trace, the second spiral trace defining a second space between windings,
the first stamped coil and second stamped coil in co-planar relation, the first stamped coil positioned within the second space of the second stamped coil, and the second stamped coil positioned within the first space of the first stamped coil, the first and second coils electronically connected; and
an adhesive covering and surrounding the first stamped coil and the second stamped coil to bond the coils together and to insulate the coils.
